# EUROPEAN PATENT SPECIFICATION

(11) **EP 2 597 918 B1**
(45) Date of publication and mention of the grant of the patent: **10.07.2019**
(21) Application number: 11809201.4
(22) Date of filing: 31.05.2011
(51) Int. Cl.: H04L 1/18

(54) **METHOD AND DEVICE FOR ALLOCATING HYBRID AUTOMATIC REPEAT REQUEST (HARQ) PROCESSES**
VERFAHREN UND VORRICHTUNG ZUR ZUORDNUNG VON HARQ-PROZESSEN
PROCÉDÉ ET DISPOSITIF POUR ALLOUER DES PROCESSUS DE DEMANDE DE RÉPÉTITION AUTOMATIQUE HYBRIDE (HARQ)

(30) Priority: 20.07.2010 CN 201010233921
(43) Date of publication of application: 29.05.2013
(73) Proprietor: ZTE Corporation, Shenzhen, Guangdong 518057 (CN)
(72) Inventor: ZHANG, Haiyan, Guangdong 518057 (CN); KE, Yazhu, Guangdong 518057 (CN)
(74) Representative: Novagraaf Technologies
(86) International application number: PCT/CN2011/075003
(87) International publication number: WO 2012/010013

(56) References cited:
- EP-A1- 1 389 847
- EP-A2- 1 657 845
- WO-A2-2008/033914
- CN-A- 101 257 371
- CN-A- 101 370 164
- US-A1- 2005 220 042
- US-A1- 2007 104 167

## Description

### Field of the Invention

The disclosure relates to the field of communications, in particular to a method for allocating Hybrid Automatic Repeat Request (HARQ) processes, a Node B and a radio network controller (RNC).

### Background of the Invention

During system technology optimization, in order to improve the user experience quality and the system throughput, High Speed Downlink Packet Access (HSDPA) technology is always evolving, at present, in the downlink direction, a modulation way 64QAM (Quadrature Amplitude Modulation) higher than 16 Quadrature Amplitude Modulation (16QAM), Multiple Input Multiple Output (MIMO) transmitting and receiving diversity technology, and multi-carrier HSDPA technology have been introduced. With the evolution of technologies with a higher throughput, the capability of User Equipment (UE) is further increased.

As one of key technologies of HSDPA, HARQ can match the number of output bits after a channel is coded with the total number of bits mapped into a HS-PDSCH physical channel set, functions of the HARQ are controlled by Redundancy Version (RV) parameters, and the accurate setting of HARQ output bits depends on the number of input bits, the number of output bits and RV parameters. Functions of the HARQ comprise two rate matching and one virtual Incremental Redundancy (IR) cache, which is also called soft channel capacity, by which the first rate matching of the HARQ is determined, the soft channel capacity will affect the redundancy version used on the network side and the transmission capability of user equipment to some extent, the larger the capacity is, the larger the corresponding effective transmission information amount is, and the higher the rate of the user equipment is. The UE may have
a plurality of HARQ processes at the same time; the sum of the virtual IR cache of the plurality of HARQ processes cannot exceed the total number of soft channel bits in this UE capability category. In order to guarantee successful decoding, both the sending side and the receiving side are required to use the same number of HARQ processes and virtual IR cache thereof and use a same total number of soft channel bits.

In the present protocols, the number of HARQ processes and the process memory size of each HARQ process are allocated by a serving Node B and notified to a Serving Radio Network Controller (SRNC) by the serving Node B. If there is an lur interface, they are notified to a Drifting Radio Network Controller (DRNC) by the serving Node B, and then notified to the SRNC by the DRNC, and finally notified to the user equipment by the SRNC.

The process in which the Node B notifies the process memory size is mainly realized by two ways:
(1) implicit way: at this time, the Node B just needs to feed back the number of the allocated HARQ processes, the Node B and the UE may obtain the process memory size used by each HARQ process by dividing the total number of soft channel bits corresponding to the capability level of the UE by the number of HARQ processes.
(2) explicit way: at this time, the Node B needs to feed back the number of the allocated HARQ processes and the process memory size required by each HARQ process. And, when in explicit allocation, to reduce the data traffic for message transfer in the message flow of the lub interface and the Uu (air interface), it is defined in the 3GPP that only the following values may be transferred: Integer (800 .. 16000 by step of 800, 17600 .. 32000 by step of 1600, 36000 .. 80000 by step of 4000, 88000 .. 160000 by step of 8000, 176000 .. 304000 by step of 16000).

The 25.306 protocol specifies the corresponding total number of soft channel bits for each UE capability category. The 25.331 protocol specifies through the CR3813 the capability category used by the UE as to whether the UE is configured with Media Access Control-enhanced high speed (MAC-ehs) or double-carrier capability and the corresponding total number of soft channel bits. In this way, the network side may make processing consistent to that made by the UE when configuring the UE capability category and allocating the process memory size.

It is found by the inventors that, as the protocol does not specify which capability category of the UE should be used by the Node B when the RNC needs to actively downgrade the capability category of the UE due to causes other than those mentioned in the CR3813 (for example, the operator limits the highest bit rate to 7.2Mbps due to market demand; or from the most economic use of cache, for category 19, when only 64QAM rather than MIMO is used or when only MIMO rather than 64QAM is used, the network side decides to downgrade to category 13 or category 15, respectively, in order to use less total number of soft channel bits or the like), in this case, the Node B is unable to determine how big the total number of soft channel bits it should use to allocate HARQ processes for the UE, at this moment, the process memory size allocated by the Node B is not accurate, leading to reduced system performance .

EP1657845 discloses a dynamic retransmission mode selector. US2007/104167 discloses signalling cell combining capabilities.

### Summary of the Invention

The main purpose of the disclosure is to provide a method for allocating HARQ processes, a Node B and a RNC, to at least solve the above problem.

According to one aspect of the invention, a method for allocating HARQ processes is provided, comprising:
a RNC sending a notification message carrying a downgraded capability category of UE to a Node B; and the Node B allocating HARQ processes for the UE by using a total number of soft channel bits corresponding to the downgraded capability category,
wherein the notification message also carries indication information used for indicating whether or not to limit the Node B to an explicit way of notifying the HARQ processes, and
wherein the indication information indicates to limit the Node B to an explicit way of notifying the HARQ processes using one of the following ways: in the case there is a first information cell in the indication information to indicate whether or not to limit the Node B to an explicit way of notifying the HARQ processes; and in the case a value of a second information cell in the indication information is used to indicate to limit the Node B to an explicit way of notifying the HARQ processes.

Preferably, in the event that the indication information indicates an explicit way, after the Node B allocates HARQ processes for the UE by using the total number of soft channel bits corresponding to the downgraded capability category, the method further comprises: the Node B notifying the UE of a process memory size and a number of the allocated HARQ processes.

Preferably, before the RNC sends the notification message carrying the indication information used for indicating whether or not to limit the Node B to an explicit way of notifying the HARQ processes, the method further comprises: the RNC determining that a downgrade cause of the UE is not a predetermined cause, wherein the predetermined cause includes: configuration of Media Access Control-enhanced high speed (MAC-ehs) or configuration of double-carrier capability.

Preferably, if the RNC determines that the downgrade cause of the UE is the predetermined cause, the RNC sends the notification message carrying indication information used for indicating that the Node B is not limited to an explicit way of notifying the HARQ processes, and after the Node B allocates HARQ processes for the UE by using a total number of soft channel bits corresponding to the downgraded capability category, the method further comprising: the Node B determines to choose between an explicit way of notifying the UE of the HARQ processes and an implicit way of notifying the UE of the HARQ processes, if the explicit way is chosen, the Node B notifies the UE of the process memory size and the number of the HARQ processes; if the implicit way is chosen, the Node B notifies the UE of the number of the HARQ processes.

Preferably, the step of the RNC sending the notification message carrying the downgraded capability category of the UE to the Node B further comprises: a SRNC sending the notification message carrying the downgraded capability category of the UE to the Node B; or, the SRNC sending the notification message carrying the downgraded capability category of the UE to a Drifting Radio Network Controller (DRNC), and the DRNC sending the received notification message to the Node B.

According to the invention, the indication information comprises at least one of the following items: High Speed Downlink Shared Channel (HS-DSCH) Frequency Diversion Duplex (FDD) Information, HS-DSCH Information To Modify, and HS-DSCH Information To Modify Unsynchronised.

According to the invention, the notification message comprises at least one of the following items: RADIO LINK SETUP REQUEST, RADIO LINK RECONFIGURATION PREPARE, and RADIO LINK RECONFIGURATION READY.

According to another aspect of the invention, a Node B is provided, comprising: a receiving module, configured to receive a notification message from a RNC, wherein the notification message carries a downgraded capability category of UE; and an allocation module, configured to allocate HARQ processes for the UE by using a total number of soft channel bits corresponding to the downgraded capability category; wherein the notification message also carries indication information used for indicating whether or not to limit the Node B to an explicit way of notifying the HARQ processes, and
wherein the indication information indicates to limit the Node B to an explicit way of notifying the HARQ processes using one of the following ways: in the case that there is a first information cell in the indication information to indicate whether or not to limit the Node B to an explicit way of notifying the HARQ processes; and in the case that a value of a second information cell in the indication information is used to indicate to limit the Node B to an explicit way of notifying the HARQ processes.

Preferably, the Node B further comprises: a notification module, configured to, in the event that the RNC indicates that the Node B is limited to an explicit way of notifying the HARQ processes, notify the UE of a process memory size and the number of the HARQ processes.

According to still another aspect of the invention, a radio network controller is provided, comprising: a configuration module, configured to include a downgraded capability category of UE in a notification message; and a sending module, configured to send the notification message to a Node B; wherein the notification message also carries indication information used for indicating whether or not to limit the Node B to an explicit way of notifying the HARQ processes, and
wherein the indication information indicates to limit the Node B to an explicit way of notifying the HARQ processes using one of the following ways: in the case that there is a first information cell in the indication information to indicate to limit the Node B to an explicit way of notifying the HARQ processes; and in the case that a value of a second information cell in the indication information is used to indicate to limit the Node B to an explicit way of notifying the HARQ processes.

Preferably, the radio network controller further comprises: a determination module, configured to determine whether a downgrade cause of the UE is configuration of MAC-ehs or owning of double-carrier capability; and the configuration module is further configured to, in the event that a determination result of the determination module is positive, include in the notification message information indicating that the Node B is not limited to an explicit way of notifying the HARQ processes; and in the event that the determination result of the determination module is negative, include in the notification message information indicating that the Node B is limited to an explicit way of notifying the HARQ processes.

Through the disclosure, the downgraded capability category of the UE is provided to the Node B through the RNC, and the Node B allocates HARQ processes according to a total number of soft channel bits corresponding to the capability category, the problem of the performance downgrade of the system caused by the inaccurate process memory size allocation is solved, so that the Node B allocates HARQ processes according to the current downgraded capability category of the UE, the accuracy of allocation is improved, and therefore the performance of the system is improved.

### Brief Description of the Drawings

Drawings described herein are provided for further understanding of the disclosure and form one part of the application. Exemplary embodiments in the disclosure and descriptions thereof are used for explaining the disclosure and will not form any improper limit to the disclosure. In the drawings:
Fig. 1 is a flow diagram of a method for allocating HARQ processes according to embodiment 1 of the disclosure;
Fig. 2 is a structure block diagram of a Node B according to embodiment 1 of the disclosure;
Fig. 3 is a detailed structure block diagram of the Node B according to embodiment 1 of the disclosure;
Fig. 4 is the structure block diagram of a RNC according to embodiment 1 of the disclosure;
Fig. 5 is the detailed structure block diagram of the RNC according to embodiment 1 of the disclosure;
Fig. 6 is a detailed flow diagram of a method for allocating HARQ processes according to embodiment 3 of the disclosure;
Fig. 7 is the detailed flow diagram of a method for allocating HARQ processes according to embodiment 4 of the disclosure;
Fig. 8 is the detailed flow diagram of a method for allocating HARQ processes according to embodiment 5 of the disclosure;
Fig. 9 is the detailed flow diagram of a method for allocating HARQ processes according to embodiment 6 of the disclosure.

### Detailed Description of the Embodiments

The disclosure will be described in details below with reference to drawings in conjunction with embodiments. It should be noted that embodiments in the application and features in the embodiments may be combined if not conflict.

### Embodiment 1

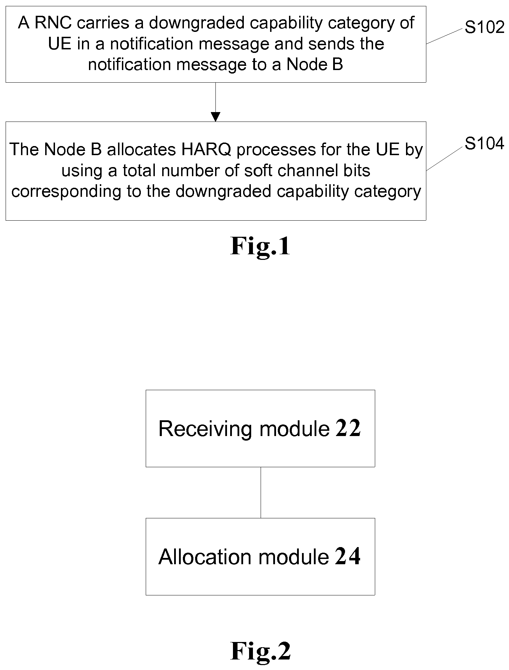

Fig. 1 is a flow diagram of a method for allocating HARQ processes according to embodiment 1 of the disclosure, as shown in Fig. 1, the method provided in the embodiment comprises:
S102: A RNC carries a downgraded capability category of UE in a notification message and sends the notification message to a Node B.

S104: The Node B allocates HARQ processes for the UE by using a total number of soft channel bits corresponding to the downgraded capability category.

In this method, as the RNC can tell the current downgraded capability category of UE, the capability category received by the Node B from the RNC is accurate and real-time, the allocation of HARQ processes performed according to the capability category is also accurate, so that the accuracy of the allocation is improved, and the performance of the system is further improved.

In order to improve the RNC's control over a process in which the Node B notifies the UE so that the Node B can choose a notification way accordingly, the notification message may also carry indication information used for indicating whether or not to limit the Node B to an explicit way of notifying the HARQ processes.

Besides, when the UE allocates its own HARQ processes according to the HARQ processes allocated by the Node B, it is possible that the UE may not be able to allocate accurately since the UE may not know which capability category it has been downgraded to. Therefore, in order to prevent the decoding error caused by inconsistent process memory sizes between the UE and the Node B, as a preferred solution, in the indication information, the RNC may indicate that the Node B is limited to an explicit way of notifying the HARQ processes; and when the Node B notifies the UE of the allocated HARQ processes, it can only use the explicit way for notification, specifically, the Node B notifies the UE of the process memory size of the allocated HARQ processes and the number of the HARQ processes.

Preferably, in order to reduce the overhead of the notification message, the RNC may decide whether or not to carry indication information based on the following determinations. Besides, in order to reduce the processing processes of the Node B and the overhead of the notification message used for notifying the allocated HARQ processes, it may decide whether to set the indication information in explicit way by the following determination:
the RNC determines whether the downgrade cause of the UE is the predetermined cause (wherein, the predetermined cause comprises: configuration of MAC-ehs or owning of double-carrier capability), if so, it determines not to carry indication information in the notification message in order to reduce the overhead of the notification message, or, it sends a notification message carrying indication information that the Node B is not limited to an explicit way of notifying the HARQ processes, in order to reduce the processing processes of the Node B and the overhead of the notification message used for notifying the allocated HARQ processes; otherwise, it sends a notification message carrying indication information that the Node B is limited to an explicit way of notifying the HARQ processes, so that the UE can perform the allocation of HARQ processes accurately in the event that the UE does not know its current downgraded capability category, in order to prevent decoding error.

When the indication information indicates that the Node B is not limited to an explicit way, in order to improve the flexibility of processing, the Node B may freely decide which way it uses to notify the allocated HARQ processes, that is, the Node B may determine by itself; when the Node B determines to notify the HARQ processes to the UE in an explicit way or implicit way, if an explicit way is chosen, the Node B notifies the UE of the process memory size and the number of the HARQ processes; if an implicit way is chosen, the Node B notifies the UE of the number of the HARQ processes.

Preferably, during the process in which the RNC carries the downgraded capability category of the UE in the notification message and sends the notification message to the Node B, it may be possible that the SRNC sends the notification message carrying the downgraded capability category of the UE to the Node B; or, it also may be possible that the SRNC sends the notification message carrying the downgraded capability category of the UE to the DRNC, and then the DRNC sends the received notification message to the Node B. Through this way, the transmission of the notification message between the RNC and the Node B is more convenient.

In order to reduce the overhead of the notification message, only one bit may be used for indicating the notification way, various specific ways are possible, for example, using whether or not there is a first information cell (preferably, the length is one bit) in the indication information to indicate whether or not to limit the Node B to an explicit way of notifying the HARQ processes; or, using a value of a second information cell (if the ways to be indicated are two ways, the length thereof should be one bit) in the indication information to indicate whether or not to limit the Node B to an explicit way of notifying the HARQ processes; wherein the indication information comprises at least one of the following items: HS-DSCH FDD Information, HS-DSCH Information To Modify, and HS-DSCH Information To Modify Unsynchronised. The implementation of carrying the notification way in the existing information is relatively simple, and the development cost is relatively low.

In consideration of simplifying the implementation and reducing the development cost, the notification message may comprise at least one of the following items: RADIO LINK SETUP REQUEST, RADIO LINK RECONFIGURATION PREPARE and RADIO LINK RECONFIGURATION READY.

Fig. 2 is a structure block diagram of a Node B according to embodiment 1 of the disclosure, as shown in Fig. 2, the Node B may comprise: a receiving module 22, configured to receive a notification message from a RNC, wherein the notification message carries a downgraded capability category of UE; an allocation module 24, coupled to the receiving module 22, configured to allocate HARQ processes to the UE by using the total number of soft channel bits corresponding to the downgraded capability category. This structure improves the accuracy of the allocation, and further improves the performance of the system.

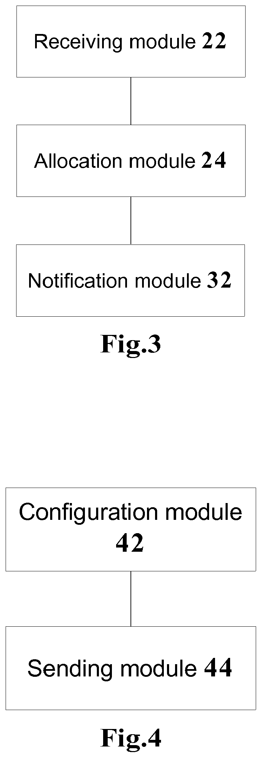

Fig. 3 is a detailed structure block diagram of the Node B according to embodiment 1 of the disclosure, as shown in Fig. 3, the Node B further comprises: a notification module 32, coupled to the allocation module 24, configured to, in the event that the RNC indicates that the Node B is limited to an explicit way of notifying the HARQ processes, notify the UE of a process memory size and a number of the HARQ processes. Through the processing of the notification module 32, the decoding error caused by inconsistent process memory sizes between the UE and the Node B is prevented.

Fig. 4 is the structure block diagram of a RNC according to embodiment 1 of the disclosure, as shown in Fig. 4, the RNC comprises: a configuration module 42, configured to configure a downgraded capability category of UE in a notification message; and a sending module 44, coupled to the configuration module 42, and configured to send the notification message to a Node B. Through this structure, the Node B can tell the current downgraded capability category of the UE so as to conveniently perform the subsequent processing.

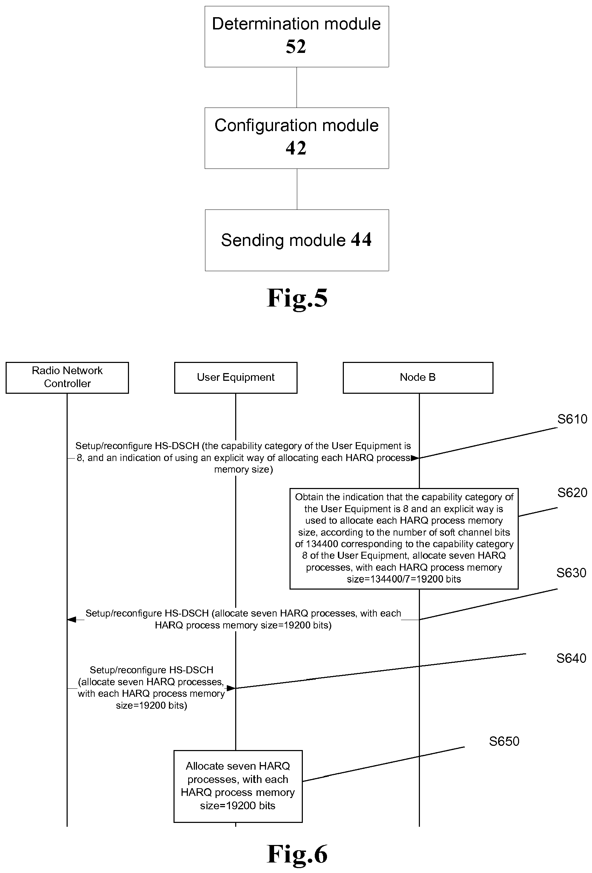

Fig. 5 is the detailed structure block diagram of the RNC according to embodiment 1 of the disclosure, as shown in Fig. 5, the RNC further comprises: a determination module, configured to determine whether a downgrade cause of the UE is configuration of MAC-ehs or owning of double-carrier capability; and the configuration module 42 is further configured to, in the event that the determination result of the determination module 52 is positive, configure indication information that the Node B is not limited to an explicit way of notifying the HARQ processes in the notification message; in the event that the determination result of the determination module 52 is negative, configure indication information that the Node B is limited to an explicit way of notifying the HARQ processes in the notification message. Through the processing of the determination module 52, the controllability of the RNC on the process in which the Node B notifies the UE is improved, and it is convenient for the Node B to decide the notification way.

### Embodiment 2

In the embodiment, the detailed processing process of a method for allocating HARQ processes will be described, to achieve the objective that both the receiving side and the sending side use consistent process memory size. The method comprises processing at the RNC, Node B and UE sides, specifically comprising the following steps:
S1: The RNC determines the downgraded capability category, configures it to the Node B (if there is an lur interface, configures it to the Node B through DRNC), and indicates whether or not to only use an explicit way (broadly, it may be called explicit allocation way, this is because that the allocation process may comprise notification, broadly) in a signalling (it may be any one of the following messages: RADIO LINK SETUP REQUEST, RADIO LINK RECONFIGURATION PREPARE and RADIO LINK RECONFIGURATION READY) to notify the process memory size, the specific indication method, for example, may be:
(1) The indication indicating whether or not to use an explicit way is added in the HS-DSCH FDD Information, HS-DSCH Information To Modify or HS-DSCH Information To Modify Unsynchronised in the existing cell as an optional cell. If the cell exists, it means that the Node B can only use the explicit way for notification, if the cell does not exist, it means that no limit exists.
(2) The indication indicating whether to use an explicit way is added in the HS-DSCH FDD Information, HS-DSCH Information To Modify or HS-DSCH Information To Modify Unsynchronised in the existing cell as a required cell. If the value of the cell is TRUE, it means that the Node B can only use the explicit way for notification, if the value of the cell is FALSE, it means that not limit exists.

Specifically, for UE capability category conversions beyond the range defined in CR3813, the Node B may be limited to only use the explicit way to notify the process memory size.

S2: The Node B receives the signalling from the RNC, analyzes the downgraded capability category of the UE and the indication indicating whether to limit the way to an explicit way, and allocates the process memory size according to the total number of soft channel bits corresponding to the capability category of the UE indicated in the signalling. Further, if the indication indicates to limit the way to the explicit way, the Node B can only use the explicit way to notify the allocated HARQ processes, and S3 is performed, otherwise, the Node B itself will decide to notify the process memory size in the explicit way or implicit way.

S3: The Node B notifies the RNC of the number of the allocated HARQ processes and the process memory size.

S4: The RNC receives a signalling (if there is an lur interface, it receives a signalling from the DRNC) from the Node B, and transfers the number of HARQ processes and the process memory size to the UE according to the notification in the signalling.

Further, if the RNC limits the Node B or DRNC to use only the explicit way, the RNC directly transfers the number of HARQ processes and the process memory size fed by the Node B or DRNC to the UE.

S5: The UE receives a signalling from the RNC, and allocates the number of HARQ processes and the process memory size according to the notification in the signalling received from the RNC.

Embodiments 3-6 combine technical solutions of the above plurality of embodiments.

### Embodiment 3

In this embodiment, through a specific case, the detailed processing process of a method for allocating HARQ processes will be described. Herein, capability category 10 of the UE will be taken as example: the total number of soft channel bits corresponding to capability category 10 is 172800 bits. Fig. 6 is a detailed flow diagram of a method for allocating HARQ processes according to embodiment 3 of the disclosure, as shown in Fig. 6, the method comprises the following steps:
S610: The RNC determines to downgrade capability category 10 to capability category 8, configures UE category 8 to the Node B in a RADIO LINK SETUP REQUEST, RADIO LINK RECONFIGURATION PREPARE or RADIO LINK RECONFIGURATION READY message, and indicates to use the explicit way to allocate the process memory size.

S620: The Node B receives a signalling from the RNC, allocates the process memory size according to the number of soft channel bits 134400 corresponding to the capability category 8 of the UE indicated in the signalling, and uses the explicit way to allocate seven HARQ processes, with the process memory size of each process=134400/7=19200 bits.

S630: The Node B notifies the number of the allocated HARQ processes and the process memory size to the RNC.

S640: The RNC receives a response message from the Node B, and transfers the seven HARQ processes and the process memory size=19200 bits of each process to the UE according to the notification in the signalling.

S650: The UE receives a signalling from the RNC, and allocates seven HARQ processes and the process memory size=19200 bits of each process according to the notification in the signalling received from the RNC.

### Embodiment 4

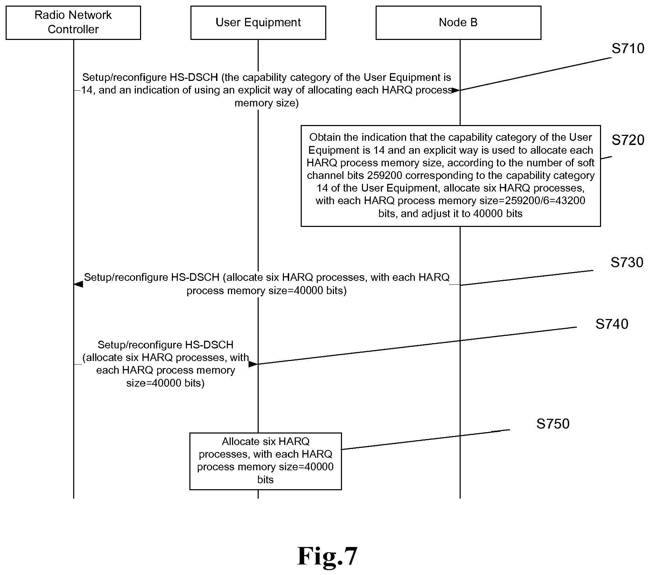

In this embodiment, through a specific case, the detailed processing process of a method for allocating HARQ processes will be described. Herein, capability category 20 of the UE will be taken as example: the total number of soft channel bits corresponding to capability category 20 is 518400 bits. Fig. 7 is the detailed flow diagram of a method for allocating HARQ processes according to embodiment 4 of the disclosure, as shown in Fig. 7, the method comprises the following steps:
S710: The RNC determines to downgrade capability category 20 to capability category 14, configures UE category 14 to the Node B in a RADIO LINK SETUP REQUEST, RADIO LINK RECONFIGURATION PREPARE or RADIO LINK RECONFIGURATION READY message, and indicates to use the explicit way to allocate the process memory size.

S720: The Node B receives a signalling from the RNC, allocates the process memory size according to the number of soft channel bits 259200 corresponding to the capability category 14 of the UE indicated in the signalling, and uses the explicit way to allocate six HARQ processes, with the process memory size of each process=259200/6=43200 bits, which is then adjusted to the process memory size discrete value 40000 bits closest to that specified in the protocol.

S730: The Node B notifies the number of the allocated HARQ processes and the process memory size to the RNC.

S740: The RNC receives a response message from the Node B, and transfers the six HARQ processes and the process memory size=40000 bits of each process to the UE according to the notification in the signalling.

S750: The UE receives a signalling from the RNC, and allocates six HARQ processes and the process memory size=40000 bits of each process according to the notification in the signalling received from the RNC.

### Embodiment 5

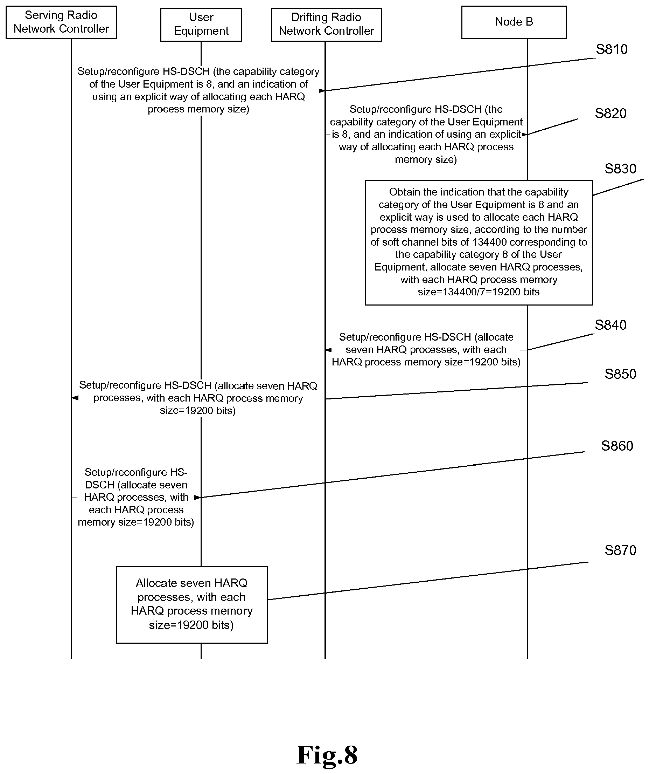

In this embodiment, through a specific case, the detailed processing process of a method for allocating HARQ processes will be described. Herein, capability category 10 of the UE will be taken as example: the total number of soft channel bits corresponding to capability category 10 is 172800 bits. Fig. 8 is the detailed flow diagram of a method for allocating HARQ processes according to embodiment 5 of the disclosure, as shown in Fig. 8, the method comprises the following steps:
S810: The SRNC determines to downgrade capability category 10 to capability category 8, configures UE category 8 to the DRNC in a RADIO LINK SETUP REQUEST, RADIO LINK RECONFIGURATION PREPARE or RADIO LINK RECONFIGURATION READY message, and indicates to use the explicit way to allocate the process memory size.

S820: The DRNC receives a signalling from the SRNC, and directly transfers the capability category 8 of the UE and the explicit allocation way indicated in the signalling to the Node B.

S830: The Node B receives a signalling from the DRNC, allocates the process memory size according to the number of soft channel bits 134400 corresponding to the capability category 8 of the UE indicated in the signalling, and uses the explicit way to allocate seven HARQ processes, with the process memory size of each process=134400/7=19200 bits.

S840: The Node B notifies the number of the allocated HARQ processes and the process memory size to the DRNC.

S850: The DRNC receives a response message from the Node B, and directly transfers the number of HARQ processes=7 and each process memory size=19200 bits to the SRNC according to the notification in the signalling.

S860: The SRNC receives a response message from the DRNC, and directly transfers the seven HARQ processes and the process memory size=19200 bits of each process to the UE.

S870: The UE receives a signalling from the RNC, and allocates seven HARQ processes and the process memory size=19200 bits of each process according to the notification in the signalling received from the RNC.

### Embodiment 6

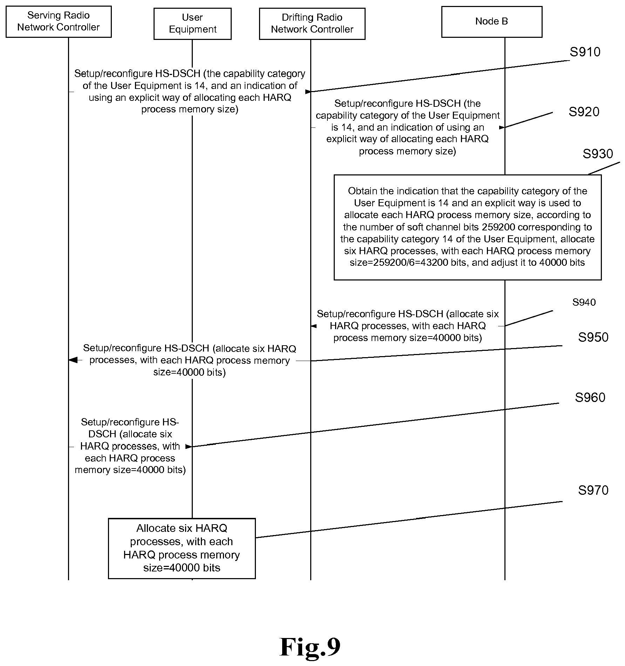

In this embodiment, through a specific case, the detailed processing process of a method for allocating HARQ processes will be described. Herein, capability category 20 of the UE will be taken as example: the total number of soft channel bits corresponding to capability category 20 is 518400 bits. Fig. 9 is the detailed flow diagram of a method for allocating HARQ processes according to embodiment 6 of the disclosure, as shown in Fig. 9, the method comprises the following steps:
S910: The SRNC determines to downgrade capability category 20 to capability category 14, configures UE category 14 to the DRNC in a RADIO LINK SETUP REQUEST, RADIO LINK RECONFIGURATION PREPARE or RADIO LINK RECONFIGURATION READY message, and indicates to use the explicit way to allocate the process memory size.

S920: The DRNC receives a signalling from the SRNC, and directly transfers the capability category 14 of the UE and the explicit allocation way indicated in the signalling to the Node B.

S930: The Node B receives a signalling from the DRNC, allocates the process memory size according to the number of soft channel bits 259200 corresponding to the capability category 14 of the UE indicated in the signalling, and uses the explicit way to allocate six HARQ processes, with the process memory size of each process=259200/6=43200 bits, which is then adjusted to the process memory size discrete value 40000 bits closest to that specified in the protocol.

S940: The Node B notifies the number of the allocated HARQ processes and the process memory size to the DRNC.

S950: The DRNC receives a response message from the Node B, and directly transfers the number of HARQ processes=6 and each process memory size=40000 bits to the SRNC according to the notification in the signalling.

S960: The SRNC receives a response message from the DRNC, and directly transfers the number of HARQ processes=6 and the each process memory size=40000 bits to the UE.

S970: The UE receives a signalling from the RNC, and allocates six HARQ processes and each process memory size=40000 bits according to the notification in the signalling received from the RNC.

From the above description, it can be seen that solutions provided in the embodiments of the disclosure improve the accuracy of the allocation, and therefore improve the performance of the system.

### Industrial applicability

Through solutions provided in the embodiments of the disclosure, the Node B allocates HARQ processes according to the current downgraded capability category of the UE, the accuracy of the allocation is improved, and therefore the performance of the system is improved. In addition, the solutions may be implemented by just slightly updating the processing ways of the RNC and the Node B in terms of software without changing the hardware architecture of the system, the implementation is easy, and high industrial applicability is provided.

Obviously, technicians in the field should understand that the above modules or steps of the disclosure could be achieved through general calculating devices, they can be concentrated in a single calculating device or distributed in a network formed by multiple calculating devices, optionally, they can be achieved by program codes that can be executed by calculating devices, thus, they can be stored in storage devices to be executed by calculating devices, and under certain situation, the shown or described steps can be executed according to an order different from the above order, or they can be achieved by respectively making them into many integrated circuit modules or by making multiple modules or steps among them into a single integrated circuit module. In this way, the disclosure is not limited to combinations of any specific hardware and software.

Above contents are only referred embodiments of the disclosure and are not used for limiting the disclosure. For technicians in the field, the disclosure can have various alternations and changes. Any modifications, equivalent replacements and improvements within the principle of the disclosure should be contained within the protection scope of the appended claims.

## Claims

1. A method for allocating Hybrid Automatic Repeat Request, HARQ, processes, the method comprising:
a Radio Network Controller, RNC, sending a notification message carrying a downgraded capability category of User Equipment, UE, to a Node B; and
the Node B allocating HARQ processes for the UE by using a total number of soft channel bits corresponding to the downgraded capability category
wherein the notification message further carries indication information used for indicating whether or not to limit the Node B to an explicit way of notifying the HARQ processes
wherein the indication information indicates to limit the Node B to an explicit way of notifying the HARQ processes using one of the following ways: in the case that there is a first information cell in the indication information to indicate to limit the Node B to an explicit way of notifying the HARQ processes; and in the case that a value of a second information cell in the indication information is used to indicate to limit the Node B to an explicit way of notifying the HARQ processes, wherein, the indication information comprises at least one of the following items: High Speed Downlink Shared Channel, HS-DSCH, Frequency Diversion Duplex, FDD, Information, HS-DSCH Information To Modify, and HS-DSCH Information To Modify Unsynchronised;
wherein the notification message comprises at least one of the following items: RADIO LINK SETUP REQUEST, RADIO LINK RECONFIGURATION PREPARE, and RADIO LINK RECONFIGURATION READY.

2. The method according to claim 1, wherein in the event that the indication information indicates an explicit way, after the Node B allocates HARQ processes for the UE by using the total number of soft channel bits corresponding to the downgraded capability category, further comprising:
the Node B notifying the UE of a process memory size and a number of the allocated HARQ processes.

3. The method according to claim 2, wherein before the RNC sends the notification message carrying the indication information used for indicating whether or not to limit the Node B to an explicit way of notifying the HARQ processes, further comprising:
the RNC determining that a downgrade cause of the UE is not a predetermined cause, wherein the predetermined cause includes: configuration of Media Access Control-enhanced high speed, MAC-ehs, or configuration of double-carrier capability.

4. The method according to claim 3, wherein if the RNC determines that the downgrade cause of the UE is the predetermined cause, the RNC sends the notification message carrying indication information used for indicating that the Node B is not limited to an explicit way of notifying the HARQ processes, and after the Node B allocates HARQ processes for the UE by using a total number of soft channel bits corresponding to the downgraded capability category, the method further comprising:
the Node B determines to choose between an explicit way of notifying the UE of the HARQ processes and an implicit way of notifying the UE of the HARQ processes, if the explicit way is chosen, the Node B notifies the UE of the process memory size and the number of the HARQ processes; if the implicit way is chosen, the Node B notifies the UE of the number of the HARQ processes.

5. The method according to claim 1, wherein the step of the RNC carrying the downgraded capability category of the UE in the notification message and sending the notification message to the Node B further comprises:
a Serving Radio Network Controller, SRNC, sending the notification message carrying the downgraded capability category of the UE to the Node B; or,
the SRNC sending the notification message carrying the downgraded capability category of the UE to a Drifting Radio Network Controller, DRNC, and the DRNC sending the received notification message to the Node B.

6. A Node B comprising:
a receiving module, configured to receive a notification message from a RNC, wherein the notification message carries a downgraded capability category of UE; and
an allocation module, configured to allocate HARQ processes for the UE by using a total number of soft channel bits corresponding to the downgraded capability category;
wherein the notification message further carries indication information used for indicating whether or not to limit the Node B to an explicit way of notifying the HARQ processes;
wherein the indication information indicates to limit the Node B to an explicit way of notifying the HARQ processes using one of the following ways: in the case that there is a first information cell in the indication information to indicate to limit the Node B to an explicit way of notifying the HARQ processes; and in the case that a value of a second information cell in the indication information is used to indicate to limit the Node B to an explicit way of notifying the HARQ processes, wherein, the indication information comprises at least one of the following items: High Speed Downlink Shared Channel, HS-DSCH, Frequency Diversion Duplex, FDD, Information, HS-DSCH Information To Modify, and HS-DSCH Information To Modify Unsynchronised;
wherein the notification message comprises at least one of the following items: RADIO LINK SETUP REQUEST, RADIO LINK RECONFIGURATION PREPARE, and RADIO LINK RECONFIGURATION READY.

7. The Node B according to claim 6, further comprising: a notification module, configured to, in the event that the RNC indicates that the Node B is limited to an explicit way of notifying the HARQ processes, notify the UE of a process memory size and a number of the HARQ processes.

8. A radio network controller, RNC, comprising:
a configuration module, configured to include a downgraded capability category of UE in a notification message; and
a sending module, configured to send the notification message to a Node B;
wherein the notification message further carries indication information used for indicating whether or not to limit the Node B to an explicit way of notifying the HARQ processes;
wherein the indication information indicates to limit the Node B to an explicit way of notifying the HARQ processes using one of the following ways: in the case that there is a first information cell in the indication information to indicate to limit the Node B to an explicit way of notifying the HARQ processes; and in the case that a value of a second information cell in the indication information is used to indicate to limit the Node B to an explicit way of notifying the HARQ processes, wherein, the indication information comprises at least one of the following items: High Speed Downlink Shared Channel, HS-DSCH, Frequency Diversion Duplex, FDD, Information, HS-DSCH Information To Modify, and HS-DSCH Information To Modify Unsynchronised;
wherein the notification message comprises at least one of the following items: RADIO LINK SETUP REQUEST, RADIO LINK RECONFIGURATION PREPARE, and RADIO LINK RECONFIGURATION READY.

9. The RNC according to claim 8, further comprising:
a determination module, configured to determine whether a downgrade cause of the UE is configuration of MAC-ehs or owning of double-carrier capability; and
wherein the configuration module is further configured to, in the event that a determination result of the determination module is positive, include in the notification message information indicating that the Node B is not limited to an explicit way of notifying the HARQ processes; and in the event that the determination result of the determination module is negative, include in the notification message information indicating that the Node B is limited to an explicit way of notifying the HARQ processes.

## Patentansprüche

1. Verfahren zum Zuweisen von Hybrid Automatic Repeat Request-, HARQ, Prozessen, wobei das Verfahren umfasst:
Senden, durch einen Radio Network Controller, RNC, einer Mitteilungsnachricht, die eine herabgestufte User Equipment-, UE, Fähigkeitskategorie übermittelt, an einen Node B; und
Zuweisen, durch den Node B, von HARQ-Prozessen für das UE unter Verwendung einer Gesamtanzahl von Soft Channel-Bits, die der herabgestuften Fähigkeitskategorie entspricht,
wobei die Mitteilungsnachricht weiter Anzeigeinformationen übermittelt, die dafür verwendet werden, anzuzeigen, ob der Node B auf eine explizite Art des Mitteilens der HARQ-Prozesse beschränkt werden soll,
wobei die Anzeigeinformationen unter Verwendung einer der folgenden Arten anzeigen, dass der Node B auf eine explizite Art des Mitteilens der HARQ-Prozesse beschränkt werden soll: in dem Fall, in dem eine erste Informationszelle in den Anzeigeinformationen vorhanden ist, um anzuzeigen, dass der Node B auf eine explizite Art des Mitteilens der HARQ-Prozesse beschränkt werden soll; und in dem Fall, in dem ein Wert einer zweiten Informationszelle in den Anzeigeinformationen verwendet wird, um anzuzeigen, dass der Node B auf eine explizite Art des Mitteilens der HARQ-Prozesse beschränkt werden soll, wobei die Anzeigeinformationen mindestens eines der folgenden Elemente umfassen: High Speed Downlink Shared Channel, HS-DSCH, Frequency Diversion Duplex, FDD, Information, HS-DSCH Information To Modify, und HS-DSCH Information To Modify Unsynchronised;
wobei die Mitteilungsnachricht mindestens eines der folgenden Elemente umfasst: RADIO LINK SETUP REQUEST, RADIO LINK RECONFIGURATION PREPARE, und RADIO LINK RECONFIGURATION READY.

2. Verfahren nach Anspruch 1, wobei
in dem Fall, in dem die Anzeigeinformationen eine explizite Art anzeigen, nachdem der Node B HARQ-Prozesse für das UE unter Verwendung der Gesamtanzahl von Soft Channel-Bits, die der herabgestuften Fähigkeitskategorie entspricht, zuweist, weiter umfassend:
Mitteilen, durch den Node B, einer Prozessspeichergröße und einer Anzahl der zugewiesenen HARQ-Prozesse an das UE.

3. Verfahren nach Anspruch 2, wobei
bevor der RNC die Mitteilungsnachricht sendet, die die Anzeigeinformationen übermittelt, welche dafür verwendet werden, anzuzeigen, ob der Node B auf eine explizite Art des Mitteilens der HARQ-Prozesse beschränkt werden soll oder nicht, weiter umfassend:
Bestimmen, durch den RNC, dass ein Herabstufungsgrund des UEs kein vorbestimmter Grund ist, wobei der vorbestimmte Grund einschließt: Konfiguration von Media Access Control-enhanced high speed, MAC-ehs, oder Konfiguration von doppelter Trägerfähigkeit.

4. Verfahren nach Anspruch 3, wobei
wenn der RNC bestimmt, dass der Herabstufungsgrund des UEs der vorbestimmte Grund ist, der RNC die Mitteilungsnachricht sendet, die die Anzeigeinformationen übermittelt, welche dafür verwendet werden, anzuzeigen, dass der Node B nicht auf eine explizite Art des Mitteilens der HARQ-Prozesse beschränkt ist, und nachdem der Node B HARQ-Prozesse für das UE unter Verwendung einer Gesamtanzahl von Soft Channel-Bits, die der herabgestuften Fähigkeitskategorie entsprechen, zuweist, das Verfahren weiter umfassend:
der Node B bestimmt, zwischen einer expliziten Art des Mitteilens der HARQ-Prozesse an das UE, und einer impliziten Art des Mitteilens der HARQ-Prozesse an das UE zu wählen, wenn die explizite Art gewählt wird, teilt der Node B dem UE die Prozessspeichergröße und die Anzahl der HARQ-Prozesse mit; wenn die implizite Art gewählt wird, teilt der Node B dem UE die Anzahl der HARQ-Prozesse mit.

5. Verfahren nach Anspruch 1, wobei
der Schritt des Übermittelns, durch den RNC, der herabgestuften Fähigkeitskategorie des UE in der Mitteilungsnachricht, und Sendens der Mitteilungsnachricht an den Node B weiter umfasst:
Senden, durch einen Serving Radio Network Controller, SRNC, der Mitteilungsnachricht, welche die herabgestufte Fähigkeitskategorie des UEs übermittelt, an den Node B; oder
Senden, durch den SRNC, der Mitteilungsnachricht, welche die herabgestufte Fähigkeitskategorie des UEs übermittelt, an einen Drifting Radio Network Controller, DRNC, und Senden, durch den DRNC, der empfangenen Mitteilungsnachricht an den Node B.

6. Node B, umfassend:
ein Empfangsmodul, das so konfiguriert ist, dass es eine Mitteilungsnachricht von einem RNC empfängt, wobei die Mitteilungsnachricht eine herabgestufte Fähigkeitskategorie des UEs übermittelt; und
ein Zuweisungsmodul, das so konfiguriert ist, dass es HARQ-Prozesse für das UE unter Verwendung einer Gesamtanzahl von Soft Channel-Bits, die der herabgestuften Fähigkeitskategorie entspricht, zuteilt;
wobei die Mitteilungsnachricht weiter Anzeigeinformationen übermittelt, die dafür verwendet werden, anzuzeigen, ob der Node B auf eine explizite Art des Mitteilens der HARQ-Prozesse beschränkt werden soll;
wobei die Anzeigeinformationen unter Verwendung einer der folgenden Arten anzeigen, dass der Node B auf eine explizite Art des Mitteilens der HARQ-Prozesse beschränkt werden soll: in dem Fall, in dem eine erste Informationszelle in den Anzeigeinformationen vorhanden ist, um anzuzeigen, dass der Node B auf eine explizite Art des Mitteilens der HARQ-Prozesse beschränkt werden soll; und in dem Fall, in dem ein Wert einer zweiten Informationszelle in den Anzeigeinformationen verwendet wird, um anzuzeigen, dass der Node B auf eine explizite Art des Mitteilens der HARQ-Prozesse beschränkt werden soll, wobei die Anzeigeinformationen mindestens eines der folgenden Elemente umfassen: High Speed Downlink Shared Channel, HS-DSCH, Frequency Diversion Duplex, FDD, Information, HS-DSCH Information To Modify, und HS-DSCH Information To Modify Unsynchronised;
wobei die Mitteilungsnachricht mindestens eines der folgenden Elemente umfasst: RADIO LINK SETUP REQUEST, RADIO LINK RECONFIGURATION PREPARE, und RADIO LINK RECONFIGURATION READY.

7. Node B nach Anspruch 6, weiter umfassend:
ein Mitteilungsmodul, das so konfiguriert ist, dass es in dem Fall, in dem der RNC anzeigt, dass der Node B auf eine explizite Art des Mitteilens der HARQ-Prozesse beschränkt ist, dem UE eine Prozessspeichergröße und eine Anzahl der HARQ-Prozesse mitteilt.

8. Radio Network Controller, RNC, umfassend:
ein Konfigurationsmodul, das so konfiguriert ist, dass es eine herabgestufte UE-Fähigkeitskategorie in eine Mitteilungsnachricht einschließt; und
ein Sendemodul, das so konfiguriert ist, dass es die Mitteilungsnachricht an einen Node B sendet;
wobei die Mitteilungsnachricht weiter Anzeigeinformationen übermittelt, die dafür verwendet werden, anzuzeigen, ob der Node B auf eine explizite Art des Mitteilens der HARQ-Prozesse beschränkt werden soll;
wobei die Anzeigeinformationen unter Verwendung einer der folgenden Arten anzeigen, dass der Node B auf eine explizite Art des Mitteilens der HARQ-Prozesse beschränkt werden soll: in dem Fall, in dem eine erste Informationszelle in den Anzeigeinformationen vorhanden ist, um anzuzeigen, dass der Node B auf eine explizite Art des Mitteilens der HARQ-Prozesse beschränkt werden soll; und in dem Fall, in dem ein Wert einer zweiten Informationszelle in den Anzeigeinformationen verwendet wird, um anzuzeigen, dass der Node B auf eine explizite Art des Mitteilens der HARQ-Prozesse beschränkt werden soll, wobei die Anzeigeinformationen mindestens eines der folgenden Elemente umfassen: High Speed Downlink Shared Channel, HS-DSCH, Frequency Diversion Duplex, FDD, Information, HS-DSCH Information To Modify, und HS-DSCH Information To Modify Unsynchronised;
wobei die Mitteilungsnachricht mindestens eines der folgenden Elemente umfasst: RADIO LINK SETUP REQUEST, RADIO LINK RECONFIGURATION PREPARE, und RADIO LINK RECONFIGURATION READY.

9. RNC nach Anspruch 8, weiter umfassend:
ein Bestimmungsmodul, das so konfiguriert ist, dass es bestimmt, ob ein Herabstufungsgrund des UEs Konfiguration von MAC-ehs oder Besitz von doppelter Trägerfähigkeit ist; und
wobei das Konfigurationsmodul weiter so konfiguriert ist, dass es in dem Fall, in dem ein Bestimmungsergebnis des Bestimmungsmoduls positiv ist, Informationen in die Mitteilungsnachricht einschließt, die anzeigen, dass der Node B nicht auf eine explizite Art des Mitteilens der HARQ-Prozesse beschränkt ist; und in dem Fall, in dem das Bestimmungsergebnis des Bestimmungsmoduls negativ ist, Informationen in die Mitteilungsnachricht einschließt, die anzeigen, dass der Node B auf eine explizite Art des Mitteilens der HARQ-Prozesse beschränkt ist.

## Revendications

1. Procédé pour allouer des processus de demande de répétition automatique hybride, HARQ, le procédé comprenant :
l'envoi par un dispositif de commande de réseau radio, RNC, d'un message de notification transportant une catégorie de capacité dégradée d'un équipement utilisateur, UE, à un noeud B ; et
l'allocation par le noeud B de processus HARQ pour l'UE en utilisant un nombre total de bits de canal logiciel correspondant à la catégorie de capacité dégradée
dans lequel le message de notification transporte en outre des informations d'indication utilisées pour indiquer s'il faut limiter ou non le noeud B à une manière explicite de notification des processus HARQ
dans lequel les informations d'indication indiquent qu'il faut limiter le noeud B à une manière explicite de notification des processus HARQ en utilisant une des manières suivantes : dans le cas où il existe une première cellule d'informations dans les informations d'indication pour indiquer qu'il faut limiter le noeud B à une manière explicite de notification des processus HARQ ; et dans le cas où une valeur d'une seconde cellule d'informations dans les informations d'indication est utilisée pour indiquer qu'il faut limiter le noeud B à une manière explicite de notification des processus HARQ, dans lequel les informations d'indication comprennent au moins un des éléments suivants : des informations de duplex par répartition en fréquence, FDD, de canal partagé de liaison descendante haut débit, HS-DSCH, des informations HS-DSCH pour modifier, et des informations HS-DSCH pour modifier non synchronisées ;
dans lequel le message de notification comprend au moins un des éléments suivants : DEMANDE DE CONFIGURATION DE LIAISON RADIO, RECONFIGURATION DE LIAISON RADIO EN PREPARATION et RECONFIGURATION DE LIAISON RADIO PRETE.

2. Procédé selon la revendication 1, dans lequel
dans le cas où les informations d'indication indiquent une manière explicite, après que le noeud B alloue des processus HARQ pour l'UE en utilisant le nombre total de bits de canal logiciel correspondant à la catégorie de capacité dégradée, comprenant en outre :
la notification par le noeud B à l'UE d'une taille de mémoire de processus et d'un nombre des processus HARQ alloués.

3. Procédé selon la revendication 2, dans lequel
avant que le RNC envoie le message de notification transportant les informations d'indication utilisées pour indiquer s'il faut limiter ou non le noeud B à une manière explicite de notification des processus HARQ, comprenant en outre :
la détermination par le RNC qu'une cause de dégradation de l'UE n'est pas une cause prédéterminée, dans lequel la cause prédéterminée inclut : une configuration de haut débit amélioré par commande d'accès au support, MAC-ehs, ou une configuration de capacité de double porteuse.

4. Procédé selon la revendication 3, dans lequel
si le RNC détermine que la cause de dégradation de l'UE est la cause prédéterminée, le RNC envoie le message de notification transportant des informations d'indication utilisées pour indiquer que le noeud B n'est pas limité à une manière explicite de notification des processus HARQ, et après que le noeud B alloue des processus HARQ pour l'UE en utilisant un nombre total de bits de canal logiciel correspondant à la catégorie de capacité dégradée, le procédé comprenant en outre :
le noeud B détermine de choisir entre une manière explicite de notification à l'UE des processus HARQ et une manière implicite de notification à l'UE des processus HARQ, si la manière explicite est choisie, le noeud B notifie à l'UE la taille de mémoire de processus et le nombre des processus HARQ ; si la manière implicite est choisie, le noeud B notifie à l'UE le nombre des processus HARQ.

5. Procédé selon la revendication 1, dans lequel
l'étape de transport par le RNC de la catégorie de capacité dégradée de l'UE dans le message de notification et d'envoi du message de notification au noeud B comprend en outre :
l'envoi par un dispositif de commande de réseau radio de desserte, SRNC, du message de notification transportant la catégorie de capacité dégradée de l'UE au noeud B ; ou
l'envoi par le SRNC du message de notification transportant la catégorie de capacité dégradée de l'UE à un dispositif de commande de réseau radio de dérive, DRNC, et l'envoi par le DRNC du message de notification reçu au noeud B.

6. Noeud B comprenant :
un module de réception, configuré pour recevoir un message de notification à partir d'un RNC, dans lequel le message de notification transporte une catégorie de capacité dégradée d'UE ; et
un module d'allocation, configuré pour allouer des processus HARQ pour l'UE en utilisant un nombre total de bits de canal logiciel correspondant à la catégorie de capacité dégradée ;
dans lequel le message de notification transporte en outre des informations d'indication utilisées pour indiquer s'il faut limiter ou non le noeud B à une manière explicite de notification des processus HARQ ;
dans lequel les informations d'indication indiquent qu'il faut limiter le noeud B à une manière explicite de notification des processus HARQ en utilisant une des manières suivantes : dans le cas où il existe une première cellule d'informations dans les informations d'indication pour indiquer qu'il faut limiter le noeud B à une manière explicite de notification des processus HARQ ; et dans le cas où une valeur d'une seconde cellule d'informations dans les informations d'indication est utilisée pour indiquer qu'il faut limiter le noeud B à une manière explicite de notification des processus HARQ, dans lequel les informations d'indication comprennent au moins un des éléments suivants : des informations de duplex par répartition en fréquence, FDD, de canal partagé de liaison descendante haut débit, HS-DSCH, des informations HS-DSCH pour modifier, et des informations HS-DSCH pour modifier non synchronisées ;
dans lequel le message de notification comprend au moins un des éléments suivants : DEMANDE DE CONFIGURATION DE LIAISON RADIO, RECONFIGURATION DE LIAISON RADIO EN PREPARATION et RECONFIGURATION DE LIAISON RADIO PRETE.

7. Noeud B selon la revendication 6, comprenant en outre :
un module de notification, configuré pour, dans le cas où le RNC indique que le noeud B est limité à une manière explicite de notification des processus HARQ, notifier à l'UE une taille de mémoire de processus et un nombre des processus HARQ.

8. Dispositif de commande de réseau radio, RNC, comprenant :
un module de configuration, configuré pour inclure une catégorie de capacité dégradée d'UE dans un message de notification ; et
un module d'envoi, configuré pour envoyer le message de notification au noeud B ;
dans lequel le message de notification transporte en outre des informations d'indication utilisées pour indiquer s'il faut limiter ou non le noeud B à une manière explicite de notification des processus HARQ ;
dans lequel les informations d'indication indiquent qu'il faut limiter le noeud B à une manière explicite de notification des processus HARQ en utilisant une des manières suivantes : dans le cas où il existe une première cellule d'informations dans les informations d'indication pour indiquer qu'il faut limiter le noeud B à une manière explicite de notification des processus HARQ ; et dans le cas où une valeur d'une seconde cellule d'informations dans les informations d'indication est utilisée pour indiquer qu'il faut limiter le noeud B à une manière explicite de notification des processus HARQ, dans lequel les informations d'indication comprennent au moins un des éléments suivants : des informations de duplex par répartition en fréquence, FDD, de canal partagé de liaison descendante haut débit, HS-DSCH, des informations HS-DSCH pour modifier, et des informations HS-DSCH pour modifier non synchronisées ;
dans lequel le message de notification comprend au moins un des éléments suivants : DEMANDE DE CONFIGURATION DE LIAISON RADIO, RECONFIGURATION DE LIAISON RADIO EN PREPARATION et RECONFIGURATION DE LIAISON RADIO PRETE.

9. RNC selon la revendication 8, comprenant en outre :
un module de détermination, configuré pour déterminer si une cause de dégradation de l'UE est une configuration de MAC-ehs ou est due à une capacité de double porteuse ; et
dans lequel le module de configuration est configuré en outre pour, dans le cas où un résultat de détermination du module de détermination est positif, inclure dans le message de notification des informations indiquant que le noeud B n'est pas limité à une manière explicite de notification des processus HARQ ; et dans le cas où le résultat de détermination du module de détermination est négatif, inclure dans le message de notification des informations indiquant que le noeud B est limité à une manière explicite de notification des processus HARQ.
